# EUROPEAN PATENT SPECIFICATION

(11) **EP 2 456 167 B1**
(45) Date of publication and mention of the grant of the patent: **30.09.2015**
(21) Application number: 10290623.7
(22) Date of filing: 23.11.2010
(51) Int. Cl.: H04L 29/08

(54) **APPLICATIVE PRESENCE INFORMATION MANAGEMENT METHOD AND SYSTEM**
VERFAHREN UND SYSTEM FÜR DIE VERWALTUNG ZUORDNENDER PRÄSENZINFORMATIONEN
PROCÉDÉ ET SYSTÈME DE GESTION APPLICATIVE D'INFORMATIONS DE PRÉSENCE

(43) Date of publication of application: 23.05.2012
(73) Proprietor: ALCATEL LUCENT, 92100 Boulogne-Billancourt (FR)
(72) Inventor: Papillon, Serge, Route de Villejust 91620 Nozay (FR); Martin, Antony, Route de Villejust 91620 Nozay (FR)
(74) Representative: Sciaux, Edmond

(56) References cited:
- EP-A1- 1 931 109

## Description

### FIELD OF THE INVENTION

This invention relates generally to the technical field of presence service.

### BACKGROUND OF THE INVENTION

By presence service is indented to mean, here, the fact of finding, retrieving, and publishing, through a communication network, presence information from a source, generally called a presence entity (also known as a presentity, a combination of the terms "presence" and "entity"), to an inte'rested party called a watcher.

Presence information comprise indicators that convey the ability and the willingness of the presentity, which may be a user, a group of users, a device, a program or a similar entity, to interact. As illustrative examples, presence information may contain
- personal availability such as presence status (e.g. "available", "busy", "away"), preferred way to communicate (including voice, video, instant messaging as well as gaming), current activity, current location, session-participation, registration-state, mood;
- device availability and capabilities such as the terminal status (on/off) and currently supported services (for examples video sharing, MMS Multimedia Messaging Service), PTT (Push- To- Talk), 2G/3G).

It is to be noted that these presence information may be manually entered, selected among a predetermined list or inferred from observing the presentity context.

Having initially been a feature of Instant Messaging (IM), presence service is finding a widespread use in a variety of communication means, especially in IP Multimedia Subsystem (IMS). Accordingly, presence service is ever expanding and gaining more and more application fields in wired as well wireless environments, while keeping on the same principle: a presence agent is responsible for making available presence information that concern a presentity to a presence server which, in turn, distributes these information to particular watchers.

In fact, more and more proprietary IMS presence servers are emerging, offering presence service respectively in connection with proprietary presence agent.

However, as they are concurrently deployed, the resultant wide variety of presence servers encounters a lot of problem. A first problem arises with regard to presence service decentralization due to the extensive operators applications granularity. A second problem relates to interoperability as existing solutions have a limited scope and do not provide an efficient applications management status.

A further problem is for the watcher who may be constrained to consult more than one presence agent to guess the availability of a certain presentity. Similarly, a presentity has to keep updated his presence information on each presence agent connected thereon.

Yet another problem is about the coherence of published presence information itself. For example, a presentity that the presence information is "available", or the like, in a first presence agent, whereas he is engaged in a voice communication session via a second presence agent, is supposed to be available to receive a call through the first presence agent, which is obviously not pertinent.

The document EP1931109 describes a method and an apparatus for deriving presence information using message traffic analysis.

An object of the present invention is to overcome the problems and disadvantages of the prior art.

Another object of the present invention is to provide a cross applications presence monitoring solution.

Another object of the present invention is to provide a value added presence service.

Another object of the present invention is to provide a centralized and network oriented presence information management.

Another object of the present invention is to provide a presence information management method independent from presence service devices.

Another object of the present invention is to provide an extensive interoperable presence information management method and system.

### DESCRIPTION OF THE DRAWING

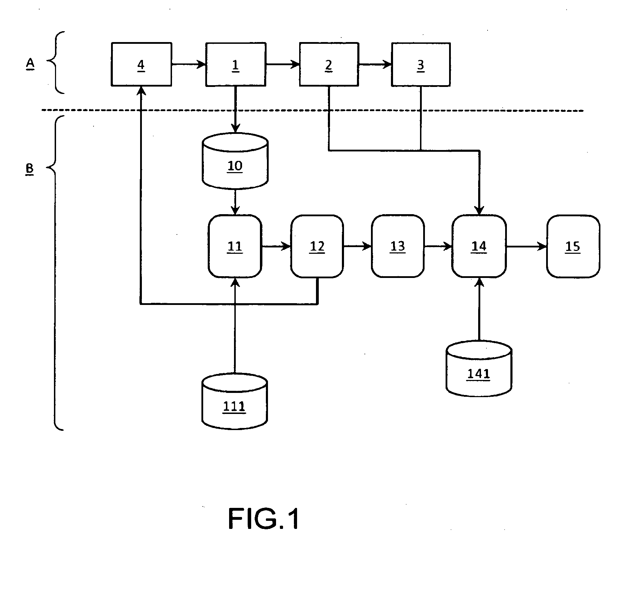

The objects, advantages and other features of the present invention will become more apparent from the following disclosure and claims. The following non-restrictive description of preferred embodiments is given for the purpose of exemplification only with reference to the accompanying drawing in which figure 1 is a block diagram illustrating a functional embodiment.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

The present invention relates to a system as defined by claim 1.

In accordance with a broad aspect, a counter programmed to track, at various network granularities, any change within the constituted presence profile is provided.

In accordance with another broad aspect, a federation server programmed to publish presence information of the presentity according to preconfigured preferences is provided.

The present invention further relates to a method as defined by claim 11.

The present invention further relates to a computer program product adapted to perform the method cited above.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DETAILED DESCRIPTION OF ILLUSTRATIVE EMBODIMENTS

With reference to figure 1, there is shown an applicative presence system including two subsystems, namely
- a presence agent-side subsystem A programmed to permit a presentity to configure the management, by the applicative presence system, of his presence Information;
- a network-side subsystem B programmed to detect and manage the presence information of the presentity according to configuration data provided thereto through the presence agent-side subsystem A.

Most notably, the presence agent may be
- any user equipment (a wired or a wireless electronic communication device, such as a cell phone, a smart phone, a personal data assistant (PDA), a pager, a hand-held computer, a desktop computer) able to make known, regularly or following any change in its presence information, to the communication network to which is connected or is able to be connected, its current presence information. As examples, one can mention Radio Resource Control connection established by a cell phone which permit to guess its reachability, or the identification process initiated by a network card toward a network server, revealing the reachability of the computer thereon embedded;
- any software application supporting presence service and running on, or accessible via, a user equipment such as
   ○ instant messaging applications (Windows Live Messenger^{Ⓡ}, Microsoft Office Communicator^{Ⓡ}, Yahoo! Messenger^{®}, Skype^{Ⓡ}, My Teamwork®, Google talk®, MSN Web messenger, or Tencent QQ® for example);
   ○ social networks and microblogging platforms (Twitter^{Ⓡ}, Jaiku^{Ⓡ}, Co-op®, Yammer® for example);
   ○ online games (World of WarcraftⓇ for example).

It is to be noted that a presentity may have more than one presence agent with different presence information thereon from one to another.

During a configuration stage, the presentity
- fills up a configuration interface 1 with his presence agent(s) related information;
- optionally, selects, via the module 2, the publication process of his presence information; and
- optionally, parameterizes the module 3 for granularity selection and user preferences entering such as permission statements (who is authorized to watch the presentity presence information, or even which part of the presence information a watcher is authorized to view for example).

In particular, the configuration interface 1 allows the presentity to specify at least a presence agent by furnishing, for example,
- the presence agent name (i.e. the software application or the hardware presence agent name), version, address (IP or MAC address), number (phone or serial number); and
- some parameters related to the presence agent such as the presentity session name on the presence agent, for example logins/pseudonyms (john.doe@hotmail.com, the_warrior, john@nintendo.com, 1122334455@orange.fr, +33(0)612345689).

Advantageously, the configuration interface 1 permits the presentity to select the presence agent(s) for which he would like to monitor his presence information.

In one embodiment, the publication process of presence information may be include
- default presence agent servers (i.e. dedicated presence servers such as those of Google talk® or Skype®); or
- a federation server programmed to publish centralized presence information of the presentity according to his preferences: a federation server that would globally publish the presence information of the presentity. This may be done in two different ways: either the federation server publishes all the presence information relative to a presentity, or, for privacy reasons, masquerades the presence information of the presentity under a federated identity. This federated publication requires the presentity to combine the information {presence agent; identity} with a federated identity. For example, an Open-ID identity, generally operated by a communication network operator, may be a federation server.

The module 3 for granularity selection permits also the presentity to define
- correlation rules among its presence information on different presence agents (if "in communication", or "in meeting" mentioned in at least one presence agent, so change all other presence information to "do not disturb" or "busy", for example);
- filtration rules on its presence information (for example, the presentity may want to be only seen as "on-line" or "off-line" and nothing more);
- preferred way to communicate by setting a prioritization among its presence agents that presence information will be published.

Provided Data during configuration stage are stored on a database 10 as depicted on figure 1.

The network-side subsystem B of the applicative presence system is responsible to figure out presence information relating to a presentity from ongoing traffic through a network node of a packet switched network to which at least a presence agent of the presentity is directly or indirectly connected.

In other words, based on the configuration data provided by the presentity during the configuration stage, the network-side subsystem B has
- to determine the presence information of a presentity from the network traffic going to and coming from all the presence agents of the presentity which are connected directly or indirectly to a packet switched network;
- constitutes a presence profile for the presentity, and then
- publishes, according to the preconfigured presentity preferences, the presence information of the presentity.

Preferably, the network node of the packet switched network, wherein the network traffic is examined, is an ingress/egress node (or more generally, edge node) within the presentity network (i.e. at the level of the modem/router/firewall node in the case of a personal environment, or at the level of the Internet Service Provider border router or the corporate perimeter router/firewall in the case of a corporate environment).

Most particularly, the network-side subsystem B comprises:
- a Deep Packet Inspection (DPI) module 11 programmed to scrutinize IP traffic passing through an edge node of the presentity packet-switched network, in order to identify presence agents present therein and the presence information that they convey;
- an extraction module 12 programmed to distinguish, by presentity, presence information and presence agents that are expected, by the DPI module 11, present in the IP traffic;
- a counter 13 of the occurrence over time (i.e. in a configurable time window) to bind with presence information (for example, status active/away) ;
- a module 14 configured to send presence information to presence servers; and
- a publisher module 15 configured to publish presence information to the application whole network.

Advantageously, the DPI module 11 is provided with
- appropriate presence agent inspection rules/signatures available on the database 111; and
- presentities related information provided while the configuration stage and available on the database 10.

Presence agent inspection rules comprises a plurality of filtering criteria assuring, with a high probability if not certainty, the detection of presence agents flows within the ongoing IP traffic. These rules may be based on different distinguishing features among presence agents such as the destination IP address, source/destination port or payload, the communication protocol, traffic pattern, occupied bandwidth.

As non limitative examples of presence agent inspection rules, one can mention (Jun Bi, et al., "Application Presence Information based Source Address Transition Detection for Edge Network Security and Management", IJCSNS International Journal of Computer Science and Network Security, VOL.7 No.1, January 2007):
- the presence agent Google Talk® uses a TCP connection to the Google Talk servers at services port 5222 to transfer instant messages as well as presence information. Moreover, this TCP connection will last the whole session, i.e. the presence agent Google Talk® connects to only one server in the whole log-on process. Then, to capture the presence, within the IP traffic, of packets relative to the presence agent Google Talk®, one can apply IP address and port address and port number of its server as filtering criteria on ongoing IP traffic packets;
- the presence agent MSN Messenger® connects to three kinds of servers: Dispatch Server (DS), Notification Server (NS) and Switchboard Server (SS). MSN Messenger® servers use port number 1863 as service port. Furthermore, the presence agent MSN Messenger® periodically sends the "PNG" command to Notification Server (NS). This command is used to ensure that the TCP connection to be alive. Accordingly, to capture, within the IP traffic, the presence of packets relative to MSN Messenger®, one can apply port number and payload characteristic as the packet filtering criteria on TCP packet addressed to one of the MSN Messenger® Notification Servers, i.e. one can filter presence channel data of MSN Messenger by checking whether the port number is 1863 and whether there is a "PNG" in the payload;
- the presence agent Tencent QQ can use either TCP or UDP to communicate with the server. The presence agent QQ also has a keep-alive mechanism: the client sends a keep-alive packet to the server every about 60 seconds. Then, the port number and the payload characteristic may be used as the packet filtering criteria: Tencent QQ packets may be filtered by checking whether the port number is 8000 (UDP) or 80 (TCP) and whether there is a keep-alive command in the payload.

More generally, the inspection rules may further match the traffic pattern or data inside IP packets in order to identify the presence agent and the presence information if it is available. For example, a SIP session may be recognized thanks to more than the port number (using the text inside like "INVITE sip:francisco@bestel.com:51060 SIP/2.0" or SIP status like "busy", or "trying").

In particular, for presence agents that traffic flows are obfuscated, some additional information may be required to discriminate which presentity is actually using them such as traffic patterns, IP addresses, port numbers, communication protocols, proxy servers. Accordingly, the DPI module 11 utilizes rules matching the presentity information (stored in the database 10) and rules matching presence agents (stored in database 111). Advantageously, this leverages the DPI capabilities to analyze network traffic to identity which presence agent is used even if its packets flow is encrypted.

In one embodiment, a probabilistic IP traffic inspection method (such as flow signature-based methods, supervised machine-learning based methods), assigning to a given flow one or more probabilities of belonging to a given presence agent is used by the DPI module 11. Based on the returned probability values, a decision agent may decide whether an analyzed IP traffic belongs to a given presence agent or not.

In one embodiment, making a relationship between the presentity and his source IP address (explicitly or by monitoring the network traffic source IP address of the presentity for other non obfuscated applications) allows to guess a presence on obfuscated presence agents.

Using the output of the DPI module 11, the extraction module 12 is in charge of extracting presentities in correspondence with their respective active presence agents and presence information so as to create a presence profile for each presentity. In fact, as soon as a presence agent is detected by the DPI module 11, the extraction module 12 extracts active presence agents and presentities information (notably **login** information) to distinguish each presentity.

In one embodiment, the presentity may be suggested some information concerning particular presence agents obtained from the network traffic analysis carried out by the DPI module 11 and the extraction module 12. For privacy reasons, this informative feedback may be enabled at the presentity initiative only for a period of time. The collected information would be suggested to the presentity via the module 4.

In order to maintain accurate presence information and detect any tiny difference therein, the counter 13 tracks any change over time within the presence profiles (session duration, session state change) relative to presentities identified by the extraction module 12. The counter 13 traces all changes in presence information, then update the presentities presence profiles accordingly.

The counter 13 is configured
- to track any change within the network traffic at various granularities such as at packet level (the number of packets, the size of packets, the frequency of packets for example), at session level (the session name, the session duration, the session rights for example), or payload level (the throughput, the exchanged volume for example);
- to deduce any change concerning the presence profile (the presentity ends a voice communication session on a first presence agent and starts a chatting session on a second presence agent, the presentity is away from his presence agent for example); and
- to update accordingly the presence profile.

Advantageously, the counter 13 permits, in addition to all capabilities of DPI module 11, an additional layer of inspection to track the presence information, leading to a pertinent and updated presence profile.

In one embodiment, the counter 13 counts the number of packets exchanged by the presentity and other parties in a configurable time-window. Additional information about the status of the presentity extracted from the packets (e.g. SIP "busy") is also extracted to fill up the presentity profile. To that end, the counter 13 may compute a status in a typical way, using a list of potential status like "on line", "away", "busy" for each presence agent.

Furthermore, having a global view of presence information of a presentity (i.e. the status of a presentity in different presence agents that are centralized in only one profile) may allow a more advanced status guessing. As illustrative example, one can suppose the case of a presentity "on line" simultaneously in chat (e.g. Google talk®) and online gaming (e.g. World of Warcraft) may trigger a new status like "chatting only".

In another embodiment, the counter 13 monitors the occupied bandwidth by a presentity during his log-on time with a particular presence agent so as to predict its presence information (for example, guessing whether the presentity is in a video or text communication depending on the occupied bandwidth).

Once a presentity profile is computed, the module 14 is configured to filter the presence information according
- to the publication process, mentioned in the module 2 during the configuration stage; and
- to presentity preferences and permission statements as entered by the presentity in the module 3.

Toward this goal, the module 14 is provided with a database 141 comprising a list of presence servers with their respective coordinates (IP address, DNS name for example).

The module 15 takes the charge of presence information distribution toward predetermined appropriate destinations (default presence servers or federation servers).

In one embodiment, the presence information, available in the module 15, may serve as inputs for particular applications that act differently depending on the state of the presentity.

Advantageously, presence agents are often kept running for a relatively long period which may enable the DPI module 11, the extraction module 12 and the counter 13 to constitute a complete and up-to-date view on all the presence information of a given presentity.

In addition to its informative function (help user to make decisions about how and when a person can be contacted), centralized presence information may be integrated into the knowledge layer so that various knowledge sources can be used to compose value added services (for example, be used to rout entering communication according to the availability and preferences of the presentity).

It is to be noted that network operators can embed the above described method and system for hosted applications: as they transmit the network traffic, they may have access to the necessary information to provide the presence server service.

It is noteworthy to remind that the term Deep Packet Inspection, used throughout the specification, is meant broadly and not restrictively, to include any other method for IP traffic analysis and/or classification. In fact, persons skilled in the art will readily appreciate how DPI for presence information guessing may be combined to or replaced with others IP traffic analysis and classification methods within the spirit and scope of above description.

## Claims

1. A system for managing presence information relating to at least a presentity provided with at least a presence agent connected to a packet switched network, said system comprising:
- a deep packet inspection module (11) provided with a database (111) including a plurality of presence agent inspection rules based on different distinguishing features among presence agents, and programmed to use these rules to identify at least a presence agent and at least a presence information relating to the presentity from the ongoing traffic through a network node within the said packet switched network; said presence information going to or coming from said presence agent,
- an extraction module (12) programmed to constitute a presence profile for the presentity, using the output of the deep packet inspection module (11).

2. The system of claim 1, further comprising a configuration interface (1) permitting the presentity to specify the presence agent or at least a parameter related thereto.

3. The system of any of claims 1 to 2, wherein the deep packet inspection module (11) is further provided with a database (10) including information related to the presentity.

4. The system of any of claims 1 to 3, further comprising a counter (13) programmed to track any change within the network traffic at various granularities, to deduce any change concerning the constituted presence profile, and to update the constituted presence profile.

5. The system of any of claims 1 to 4, further comprising a federation server programmed to publish presence information of the presentity according to preconfigured preferences.

6. The system of claim 5, wherein the federation server masquerades the presence information of the presentity under a federated identity.

7. The system of claim 5, wherein the preconfigured preferences comprise permission statements.

8. The system of claim 5, wherein the preconfigured preferences comprise correlation rules among presence information or filtration rules on presence information.

9. The system of any of claims 1 to 8, wherein the presence agent is a user equipment.

10. The system of any of claims 1 to 8, wherein the presence agent is a software application.

11. A method for managing presence information relating to at least a presentity provided with at least a presence agent connected to a packet switched network, said method comprising:
- a deep packet inspection step using a plurality of presence agent inspection rules based on different distinguishing features among presence agents for identifying at least a presence agent and at least a presence information relating to the presentity from the ongoing traffic through a network node within the said packet switched network; said presence information going to or coming from said presence agent,
- a constitution step of a presence profile for the presentity, using the output of the deep packet inspection step.

12. The method of claim 11, further comprising a tracking step of any change within the network traffic at various granularities, a deduction step of any change concerning the constituted presence profile, and an updating step of the constituted presence profile.

13. The method of any of claims 11 to 12, further comprising a configuration step permitting the presentity to specify the presence agent or at least a parameter related thereto.

14. The method of any of claims 11 to 13, wherein the presence information is published according to preconfigured preferences.

15. A computer program including instructions stored on a memory of a computer and/or dedicated system, wherein said computer program is adapted to perform the method as claimed in preceding claims 11 to 14.

## Patentansprüche

1. System für die Verwaltung von Präsenzinformationen im Zusammenhang mit mindestens einer Presentity, ausgestattet mit mindestens einem Präsenzagenten, der an ein paketvermitteltes Netzwerk angeschlossen ist, wobei besagtes System umfasst:
- ein Deep-Packet-Inspection-Modul (11), ausgestattet mit einer Datenbank (111), die eine Vielzahl von Präsenzagenten-Prüfregeln umfasst, die auf verschiedenen Unterscheidungsmerkmalen zwischen Präsenzagenten beruhen, und die programmiert ist für die Verwendung dieser Regeln zur Identifizierung mindestens eines Präsenzagenten und mindestens einer Präsenzinformation, die im Zusammenhang stehen mit der Presentity aus dem fortlaufenden Datenverkehr über einen Netzwerkzugangsknoten in besagtem paketvermitteltem Netzwerk; wobei besagte Präsenzinformation an besagten Präsenzagenten geht oder von diesem kommt,
- ein Extraktionsmodul (12), programmiert für das Erstellen eines Präsenzprofils für die Presentity unter Verwendung des Outputs des Deep-Packet-Inspection-Moduls (11).

2. Das System nach Anspruch 1, weiterhin eine Konfigurationsschnittstelle (1) umfassend, die der Presentity das Spezifizieren des Präsenzagenten oder mindestens eines damit zusammenhängenden Parameters ermöglicht.

3. Das System nach einem jeglichen der Ansprüche 1 bis 2, wobei das Deep-Packet-Inspection-Modul (11) weiterhin mit einer Datenbank (10) ausgestattet ist, die Informationen zur Presentity enthält.

4. Das System nach einem jeglichen der Ansprüche 1 bis 3, weiterhin einen Zähler (13) umfassend, der programmiert ist für das Nachverfolgen jeglicher Veränderung im Netzwerkverkehr bei mehreren Granularitäten zwecks Ableitung jeglicher Veränderung bezüglich des erstellten Präsenzprofils sowie für das Aktualisieren des erstellten Präsenzprofils.

5. Das System nach einem jeglichen der Ansprüche 1 bis 4, weiterhin einen Verbundserver umfassend, der programmiert ist für das Veröffentlichen von Präsenzinformationen zur Presentity gemäß vorab konfigurierter Präferenzen.

6. Das System nach Anspruch 5, wobei der Verbundserver die Präsenzinformationen der Presentity in einer Verbundidentität maskiert.

7. Das System nach Anspruch 5, wobei die vorab konfigurierten Präferenzen Befugnisangaben umfassen.

8. Das System nach Anspruch 5, wobei die vorab konfigurierten Präferenzen Korrelationsregeln für Präsenzinformationen oder Filterungsregeln für Präsenzinformationen umfassen.

9. Das System nach einem jeglichen der Ansprüche 1 bis 8, wobei der Präsenzagent ein Benutzerendgerät ist.

10. Das System nach einem jeglichen der Ansprüche 1 bis 8, wobei der Präsenzagent eine Softwareanwendung ist.

11. Verfahren für die Verwaltung von Präsenzinformationen im Zusammenhang mit mindestens einer Presentity, ausgestattet mit mindestens einem Präsenzagenten, der an ein paketvermitteltes Netzwerk angeschlossen ist, wobei besagtes Verfahren umfasst:
- einen Deep-Packet-Inspection-Schritt, eine Vielzahl von Präsenzagenten-Prüfregeln verwendend, die auf verschiedenen Unterscheidungsmerkmalen zwischen Präsenzagenten beruhen und zur Identifizierung mindestens eines Präsenzagenten und mindestens einer Präsenzinformation dienen, die im Zusammenhang stehen mit der Presentity aus dem fortlaufenden Datenverkehr über einen Netzwerkzugangsknoten in besagtem paketvermitteltem Netzwerk; wobei besagte Präsenzinformation an besagten Präsenzagenten geht oder von diesem kommt,
- einen Schritt zur Erstellung eines Präsenzprofils für die Presentity unter Verwendung des Outputs des Deep-Packet-Inspection-Schritts.

12. Das Verfahren nach Anspruch 1, weiterhin einen Nachverfolgungsschritt für jegliche Veränderung im Netzwerkverkehr bei verschiedenen Granularitäten umfassend, einen Deduktionsschritt für jegliche Veränderung bezüglich des erstellten Präsenzprofils und einen Aktualisierungsschritt für das erstellt Präsenzprofil.

13. Verfahren nach einem jeglichen der Ansprüche 11 bis 12, weiterhin einen Konfigurationsschritt umfassend, welcher der Presentity das Spezifizieren des Präsenzagenten oder mindestens eines damit zusammenhängenden Parameters ermöglicht.

14. Verfahren nach einem jeglichen der Ansprüche 11 bis 13, wobei die Präsenzinformation gemäß den vorab konfigurierten Präferenzen veröffentlicht wird.

15. Ein Computerprogramm, im Speicher eines Computers oder geeigneten Systems Anweisungen umfassend, wobei besagtes Computerprogramm dafür ausgelegt ist, das Verfahren nach den vorgenannten Ansprüchen 11 bis 14 auszuführen.

## Revendications

1. Système de gestion d'informations de présence relatives à au moins une entité de présence, au moins un agent de présence étant connecté à un réseau à commutation de paquets, ledit système comprenant :
- un module d'inspection de paquet en profondeur (11) doté d'une base de données (111) comprenant une pluralité de règles d'inspection d'agent de présence sur la base de différentes caractéristiques de distinction parmi les agents de présence, et programmé pour utiliser ces règles afin d'identifier au moins un agent de présence et au moins une information de présence relative à l'entité de présence dans le trafic en cours par l'intermédiaire d'un noeud de réseau dans ledit réseau à commutation de paquets ; ladite information de présence allant vers ou provenant dudit agent de présence ;
- un module d'extraction (12) programmé pour constituer un profil de présence pour l'entité de présence, à l'aide de la sortie du module d'inspection de paquet en profondeur (11).

2. Système selon la revendication 1, comprenant en outre une interface de configuration (1) permettant à l'entité de présence de spécifier l'agent de présence ou au moins un paramètre associé à celui-ci.

3. Système selon l'une quelconque des revendications 1 à 2, dans lequel le module d'inspection de paquet en profondeur (11) est en outre doté d'une base de données (10) comprenant des informations relatives à l'entité de présence.

4. Système selon l'une quelconque des revendications 1 à 3, comprenant en outre un compteur (13) programmé pour suivre tout changement dans le trafic du réseau selon diverses granularités, pour déduire tout changement concernant le profil de présence constitué, et pour mettre à jour le profil de présence constitué.

5. Système selon l'une quelconque des revendications 1 à 4, comprenant en outre un serveur de fédération programmé pour publier les informations de présence de l'entité de présence en fonction de préférences préconfigurées.

6. Système selon la revendication 5, dans lequel le serveur de fédération masque l'identité des informations de présence de l'entité de présence sous une identité fédérée.

7. Système selon la revendication 5, dans lequel les préférences préconfigurées comprennent des déclarations d'autorisation.

8. Système selon la revendication 5, dans lequel les préférences préconfigurées comprennent des règles de corrélation entre les informations de présence ou des règles de filtrage des informations de présence.

9. Système selon l'une quelconque des revendications 1 à 8, dans lequel l'agent de présence est un équipement utilisateur.

10. Système selon l'une quelconque des revendications 1 à 8, dans lequel l'agent de présence est une application logicielle.

11. Procédé de gestion d'informations de présence relatives à au moins une entité de présence dotée d'au moins un agent de présence connecté à un réseau à commutation de paquets, ledit procédé comprenant les étapes suivantes :
- une étape d'inspection de paquet en profondeur utilisant une pluralité de règles d'inspection d'agent de présence sur la base de différentes caractéristiques de distinction parmi les agents de présence, afin d'identifier au moins un agent de présence et au moins une information de présence relative à l'entité de présence dans le trafic en cours par l'intermédiaire d'un noeud de réseau dans ledit réseau à commutation de paquets ; ladite information de présence allant vers ou provenant dudit agent de présence ;
- une étape de constitution d'un profil de présence pour l'entité de présence, utilisant la sortie de l'étape d'inspection de paquet en profondeur.

12. Procédé selon la revendication 11, comprenant en outre une étape de suivi de tout changement dans le trafic du réseau selon diverses granularités, une étape de déduction de tout changement concernant le profil de présence constitué, et une étape de mise à jour du profil de présence constitué.

13. Procédé selon l'une quelconque des revendications 11 à 12, comprenant en outre une étape de configuration permettant à l'entité de présence de spécifier l'agent de présence ou au moins un paramètre associé à celui-ci.

14. Procédé selon l'une quelconque des revendications 11 à 13, dans lequel l'information de présence est publiée en fonction de préférences préconfigurées.

15. Programme informatique comprenant des instructions stockées sur une mémoire d'un ordinateur et/ou d'un système dédié, dans lequel ledit programme informatique est adapté pour exécuter le procédé selon les revendications précédentes 11 à 14.
